Europäisches Patentamt

(19)     European Patent Office

         Office européen des brevets

(11)     EP 0 868 843 A1

(12)                 EUROPEAN PATENT APPLICATION

(43) Date of publication:                          (51) Int. Cl.$^6$: **A01G 1/04**
     07.10.1998 Bulletin 1998/41

(21) Application number: 98200981.3

(22) Date of filing: 27.03.1998

(84) Designated Contracting States:                (72) Inventor:
     AT BE CH DE DK ES FI FR GB GR IE IT LI LU MC        Huys, Theodorus Hubertus Johannes
     NL PT SE                                            NL-5961 ER HORST (NL)
     Designated Extension States:
     AL LT LV MK RO SI                            (74) Representative:
                                                        de Bruijn, Leendert C.
(30) Priority: 27.03.1997 NL 1005674                    Nederlandsch Octrooibureau
                                                        P.O. Box 29720
(71) Applicant:                                         2502 LS  Den Haag (NL)
     Mushroom Consulting J. Huys B.V.
     5960 AC  Horst (NL)

(54) **Use of biologically degradable plastic sheet as a casing or isolation material in mushroom cultivation**

(57)     The invention relates to the use of biologically degradable plastic sheet as casing or isolation material for a substrate onto which mushrooms are cultivated respectively, to a process for the cultivation of mushrooms on a substrate wherein the substrate mixed with mushroom spawn is brought into a cultivation chamber, wherein during the mushroom cultivation the substrate is put either on a plastic sheet or is kept in plastic bags or packages, the plastic being biologically degradable, as well as to a fertilizer substance or compost material comprising a substrate onto which mushrooms have been cultivated as well as a biologically degradable plastic sheet serving as casing or isolation material during the cultivation and which has been completely or partially biologically degraded.

EP 0 868 843 A1

## Description

The present invention resides in the field of mushroom cultivation and in processing its waste material originating from said cultivation.

Mushroom cultivation takes place on a substrate. This substrate consists of a mixture of various materials such as straw, horse manure, wood chips, water, chicken manure and the like. The nature of the mixtures depends upon the kind of mushroom wanted.

After a pretreatment of the substrate usually taking place at high temperature (55-120°C), the substrate is mixed with mushroom spawn and brought into cultivation chambers for further cultivation.

In the Netherlands this cultivation usually takes place on steel shelves or in containers.

In order to prevent too much loss of heat and to maintain a high $CO_2$ level a plastic sheet is often put under the substrate. At the end of the cultivation this plastic should be collected, removed and destroyed.

In a large part of the world the substrate, after heat treatment, is put in plastic bags or in pressurized blocks covered with plastic. These blocks pass through a so-called shrink channel so that the plastic shrinks and gives these blocks sufficient solidity for transport.

Subsequently, the bags or blocks are placed on shelves or scaffoldings for further cultivation. During cultivation, in which in a certain stage the bags or blocks (packages) are opened at the top, an optionally controlled climate exists. This varies from 25 to 14°C, a relative humidity between 80 and 100 %, and a $CO_2$ content between 500 and 6000 ppm.

At the end of the cultivation all bags should be emptied and the blocks should also be freed of plastic. As the processed substrate is often used as agricultural fertilizer, no plastic remains are allowed to stay behind. This is a time-consuming and dirty work. In this respect one should not forget that the spreading of diseases is not unthinkable. This waste plastic should be collected and destroyed.

The invention is aimed at offering a solution for the abovementioned problems and relates to the use of biologically degradable plastic sheets as casing or isolation material respectively for a substrate onto which mushrooms are cultivated.

According to the invention the biologically degradable plastic sheets can be put under the substrate during cultivation in shelves or containers, and during cultivation in bags or packages the degradable sheets can be used as described hereinabove.

The above is particularly valid for all kinds of mushrooms (_Agaricus_ species), but in the most broadest sense the invention can be used with respect to other mushroom species, for instance _Pleurotus ostreatus_ (oyster mushroom), _Philiota namenko_ (Nameko), _Flammulina velutipes_ ("velvet paw"), _Lentinus edodes_ (shiitake) and _Tremella fuciformis_ (white fungus). It is observed that the cultivation conditions of these mushrooms vary, dependent upon the kind of mushroom. However, the cultivation conditions are generally known or well described in the general agricultural literature and need not be reiterated here. For instance, the cultivation of mushrooms is described in CRC Crit.Rev.Food Sci.Nutr. 26, 157-223 (1987).

The expression "biologically degradable plastic" as used in the present specification and claims relates to so-called "environmentally degradable" polymers. A definition thereof is given in Kirk-Othmer, Encyclopedia of Chemical Technology, Vol. 19, pages 968-1004 (latest edition). Consequently, the biologically degradable plastic deals with "a macromolecular material formed by the chemical combination of monomers having either the same or different chemical composition" and/or "a material that contains as an essential ingredient an organic substance of large molecular weight, is solid in its finished stage, and, at some stage in its manufacture or in its processing into finished articles, can be shaped by flow".

Therefore with the expression "environmentally acceptable degradable plastic or polymer" such a material is meant which is degraded according to the mechanisms of "biodegradation, photodegradation, oxidation or hydrolysis to leave no harmful residues in the environment" as described in Kirk-Othmer (vide page 971).

The invention relates in particular to biological degradation in an oxygen containing ambience which schematically proceeds as follows:

$$polymer + O_2 \rightarrow CO_2 + H_2O + biomass + residue \; (1)$$

Naturally, living bacteria and the presence of moisture also play a role in this reaction.

In particular, the biologically degradable plastic used according to the invention should meet the test protocol ASTM D5338-92.

In the use of biologically degradable plastic sheets according to the invention the plastic is especially selected from polylactic acid, cellophane, PABV, polysaccharide such as starch and cellulose derivatives, polyester, polyvinylalcohol, polyethylene glycol and poly-aspartamic acid.

It is also possible to use a biologically degradable composition which consists on the one hand of a biologically degradable polymer and on the other hand of a biologically degradable filler material, for instance a fibre material. In this respect reference can be made e.g. to the compostable starch composition processed from the melt as described in WO 97/03121 (corresponding to 95FI-003409).

Starch or cellulose polymers (polysaccharides) are especially used in the invention.

During the use as casing or isolation material respectively, i.e. during the mushroom cultivation, the biological degradation of the plastic will already start. Of course, the sheet material - including its thickness - is selected in such a way that the function of the casing or isolation material respectively will be exerted during the required period of time. However, in general, it is not necessary that the sheet material stays intact during the complete mushroom culture. During cultivation conditions already after a few days - depending on the climate conditions - visible signs of degradation can be observed; at the time of harvesting the mushrooms, very often already half or more of the synthetic material may be digested. Naturally, the selection of the (thickness of the) synthetic sheet can also be dependent on the price.

The thickness of the sheet used as such or in the form of bags or packages generally lies between 10 and 200 $\mu$m, in particular between 20-100 $\mu$m. A value between 30 and 80 $\mu$m, in particular of 50-60 $\mu$m, is especially preferred. The preferred thickness is not only dependent on the desired degradation during the cultivation process, but also on the desired processibility, in which context one should think of the above described shrinkage of plastic sheet around the pressurized substrate blocks in the so-called shrink channels. It appeared that a thickness of 30-80 $\mu$m, in particular 50-60 $\mu$m suffices well in this respect: the substrate is well kept and no tears occur. When using a wrong thickness, the shrinked sheet cools down too slowly, so that the packages when stacked on pallets for transport, are sticking together.

As has already been suggested above the biologically degradable plastic according to the invention is biologically degradable for 100 %. Already during the cultivation process the sheet is often degraded for a great part. Tests have shown that this has no disadvantageous effects on the cultivation process or the final result of the end product. At the end of the cultivation the residues of the packages, bags or sheets as such are removed together with the processed substrate, after which it degrades for 100 % in the further treatment (composting process). The processed substrate is often stored for some time which induces a natural heating. Temperatures can rise very high then. Dependent on this heating the sheet degrades more quickly, for instance within a week at 60°C. At lower temperatures this takes proportionally longer.

The use according to the invention has great advantages and is for instance labour-saving, cost-saving and environmentally safe. Further the cultivation is in no way negatively influenced.

The invention also relates to a package or bag containing a substrate for the mushroom cultivation, in which the package or bag consists of a biologically degradable plastic sheet as defined hereinabove, i.e. what has been stated in relation to the use according to the invention.

Further, the invention relates to a process for the cultivation of mushrooms on a substrate wherein the substrate mixed with mushroom spawn is brought into a cultivation chamber and during this cultivation of mushrooms the substrate is put either on a plastic sheet or is kept in plastic bags or packages characterized by the plastic being biologically degradable.

With respect to the plastic or polymeric sheet material in the process according to the invention, the same features apply as mentioned hereinabove for the use according to the invention.

The waste product of the application or the process according to the invention respectively relates to a superior fertilizer or compost material in which the biologically degradable plastic sheet material does not disturb because it already has been completely or partially degraded or is degraded within a foreseeable time period for 100 % to environmentally acceptable components respectively. In fact this fertilizer or this compost material is a new material. Consequently, the invention also relates to fertilizer or compost material comprising a substrate onto which mushrooms have been cultivated as well as a plastic sheet such as defined in the above, in which during cultivation the plastic sheet served as casing or isolation material and has been completely or partially biologically degradable.

It will be clear that the fertilizer or compost material according to the invention can be obtained according to the above described process according to the invention.

A degradable plastic sheet to be used according to the invention has been subjected to a number of tests. The test report reads as follows:

**CERTIFICATE FOR AWARDING THE 'OK COMPOST' CONFORMITY MARK No. 096-004-261-B Issued by AIB-VINCOTTE Inter**

<u>For the product described hereafter</u>

Group of products:
Bioplastics
Products family:
Bio bags for the collection of bio-waste
Make:
Fardem
Type(s):
Bio Bag
Particularities:
Dimensions 500 x 600-55$\mu$
Validity of the certificate:
from 1 December 1996 till 1 December 1997
<u>Examination applied for by:</u>
Fardem N.V.
Toekomstlaan 18
Industrieterrein A
2340 BEERSE
Belgium

<u>Criteria for certification:</u>

The prototype tests performed have proved that the product complies with the requirements of the AVI test programmes D9 and D10. This includes the following tests and examinations:

- checking of the compostability of the product which means:

  | - standard composting | - standard biogasification |
  | - drying | - standard soil test |
  | - ecotoxicity test | - compost quality chemical |
  | - pilot scale composting | - complete biodegradation |

- checking of the mechanical resistance of the product

The above mentioned tests are proving the conformity with the following standards:

- ASTM D 5338-92
- ASTM D 5511-94
- ASTM D 5152-92
- ASTM E 1440-91
- Analytical Methods Compost Bundesgütegemeinschaft Kompost
- Modified OECD 207
- CEN TC 261/SC4/WG2
- NF 11 34-004 with exception of the opacity

Conclusions of the examination

The above mentioned product can be considered as compostable, and meets the requirements of:

- Essential Requirements of the European Directive 94/62/EC
- ORCA
- Essential Requirements of LAGA-M10
- OVAM

Conformity of the series:

The products for which the conformity mark "OK COMPOST" is granted, must be accompanied by the present certificate, and must bear the "OK COMPOST" conformity mark.
The conformity of the series is guaranteed by the procedures of the awarding and the use of the "OK COMPOST" conformity mark.

**Claims**

1. Use of a biologically degradable plastic sheet as casing or isolation material for a substrate onto which mushrooms are cultivated.

2. Use according to claim 1 in which the casing material has the shape of a bag or package.

3. Use according to claim 1 or 2, in which the biologically degradable plastic sheet has been selected from polylactic acid, cellophane, PABV, polysaccharide such as starch and cellulose derivatives, polyester, polyvinylalcohol, polyethylene glycol and poly-aspartamic acid.

4. Use according to claim 3, in which the polymer is a starch or cellulose derivative.

5. Use according to one or more of the preceding claims, in which the thickness of the plastic sheet is 10-200, in particular 20-100, more in particular 30-80, for instance 50-60 $\mu$m.

6. Package or bag containing a substrate for mushroom cultivation in which the package or bag consists of a biologically degradable plastic sheet as defined in one or more of the preceding claims.

7. Process for cultivating mushroom on a substrate in which the substrate mixed with mushroom spawn is brought into a cultivation chamber wherein during cultivation of the mushrooms the substrate is either put on a plastic sheet or is kept in plastic bags or packages, characterized in that the plastic is biologically degradable.

8. Process according to claim 7, in which the plastic is a sheet as defined in one or more of claims 3-5.

9. Fertilizer or compost material comprising a substrate onto which mushrooms have been cultivated as well as a plastic sheet as defined in one or more of claims 1-5, in which during cultivation the plastic sheet served as casing or isolation material and has been completely or partially biologically degraded.

**European Patent Office**

# EUROPEAN SEARCH REPORT

**Application Number**

EP 98 20 0981

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 645 078 A (COMPAC INTERNATIONAL) 29 March 1995<br>* page 1, line 40 - line 50 * | 1,2,6,7, 9 | A01G1/04 |
| A | DATABASE WPI<br>Section Ch, Week 7825<br>Derwent Publications Ltd., London, GB;<br>Class A92, AN 78-88565A '25!<br>XP002047724<br>& JP 53 124 678 A (UNITIKA)<br>* abstract * | 1,2,6,7, 9 | |
| A,D | WO 97 03121 A (PRIMALCO) 30 January 1997<br>* abstract * | 1,3,4 | |
| A | WO 89 05574 A (3M AUSTRALIA) 29 June 1989 | | |

**TECHNICAL FIELDS SEARCHED (Int.Cl.6)**

A01G

The present search report has been drawn up for all claims

| Place of search | Date of completion of the search | Examiner |
|---|---|---|
| THE HAGUE | 29 June 1998 | Merckx, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)